(19) Europäisches Patentamt
European Patent Office
Office européen des brevets

(11) **EP 3 227 643 B1**

(12) **FASCICULE DE BREVET EUROPEEN**

(45) Date de publication et mention de la délivrance du brevet:
**16.10.2019 Bulletin 2019/42**

(21) Numéro de dépôt: **15817472.2**

(22) Date de dépôt: **04.12.2015**

(51) Int Cl.:
**G01D 21/00** [(2006.01)]     **G06Q 10/06** [(2012.01)]
**G06Q 50/04** [(2012.01)]

(86) Numéro de dépôt international:
**PCT/FR2015/053325**

(87) Numéro de publication internationale:
**WO 2016/087797 (09.06.2016 Gazette 2016/23)**

(54) **PROCÉDÉ DE FABRICATION DE PIÈCES AYANT UNE EXIGENCE DIMENSIONNELLE ASSIMILÉE À UNE CHAÎNE DE COTES**

VERFAHREN ZUR HERSTELLUNG VON TEILEN MIT EINER ABMESSUNGSANFORDERUNG GLEICH EINER TOLERANZBERECHNUNG

METHOD OF MANUFACTURING PARTS HAVING A DIMENSIONAL REQUIREMENT AKIN TO A TOLERANCE STACK UP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2014 FR 1461996**

(43) Date de publication de la demande:
**11.10.2017 Bulletin 2017/41**

(73) Titulaire: **SAFRAN AIRCRAFT ENGINES**
**75015 Paris (FR)**

(72) Inventeurs:
• **FERRY, Olivier**
**77550 Moissy-cramayel (FR)**
• **CAMBEFORT, Arnaud**
**77550 Moissy-cramayel (FR)**
• **CLERET DE LANGAVANT, Charles**
**77550 Moissy-cramayel (FR)**
• **COURTIN, Pascal**
**77550 Moissy-cramayel (FR)**
• **HARDOUIN, Nicolas**
**77550 Moissy-cramayel (FR)**

(74) Mandataire: **Regimbeau**
**20, rue de Chazelles**
**75847 Paris Cedex 17 (FR)**

(56) Documents cités:
**US-A- 5 655 110**

EP 3 227 643 B1

## Description

DOMAINE DE L'INVENTION

L'invention porte sur l'utilisation d'indicateurs statistiques en milieu industriel, par exemple dans l'industrie aéronautique, en particulier pour faciliter le suivi et le contrôle de la fabrication de pièces.

ETAT DE LA TECHNIQUE

La fabrication de pièces, notamment mécaniques, en milieu industriel se heurte à deux contraintes opposées, à savoir l'augmentation des cadences et volumes de fabrication d'une part, et l'augmentation des niveaux de qualité requis d'autre part, ce qui est en particulier vrai dans le domaine aéronautique.

Il est aujourd'hui impossible d'effectuer des contrôles qualité pour la totalité des pièces fabriquées sauf à nuire considérablement à la cadence de fabrication. On utilise donc en général des indicateurs statistiques de la fabrication, permettant de déduire une information globale sur la qualité de l'ensemble des pièces fabriquées à partir d'information spécifiques de la qualité d'un nombre fini de pièces prélevées en tant qu'échantillon.

Outre les contrôles en fin de production qui peuvent être faits sur des échantillons ayant un nombre limité de pièces, il est généralement également effectué des contrôles en cours de production de manière à pouvoir éventuellement piloter le flux de production, c'est-à-dire ajuster les conditions de fabrication pour s'assurer que les pièces fabriquées continuent de répondre aux critères de qualités requis. Dans certains cas, ces contrôles statistiques en cours de production peuvent amener à stopper complètement la production, notamment si les pièces produites présentes des défauts de qualité trop importants et que le flux de fabrication doit être réinitialisé entièrement.

Les contrôles qualité sont faits en relation à une dimension caractéristique des pièces qui sont fabriquées. Cette dimension caractéristique peut être par exemple une cote particulière de la pièce, sa masse, ou toute autre caractéristique mesurable desdites pièces.

Pour effectuer les contrôles statistiques, on prélève successivement plusieurs échantillons, chaque échantillon comprenant plusieurs pièces du flux de fabrication, et on mesure ensuite la dimension caractéristique de chaque pièce de l'échantillon prélevé. A partir des différentes mesures de la dimension caractéristique des pièces de l'échantillon prélevé, on calcule la valeur d'un indicateur statistique préalablement choisi pour suivre la qualité du flux de fabrication.

Il existe divers indicateurs statistiques pouvant être utilisés afin de suivre l'évolution d'un flux de fabrication de pièces, chaque indicateur statistique donnant des informations différentes permettant d'ajuster les conditions de fabrication d'une manière ou d'une autre.

La plupart des indicateurs statistiques utilisés pour le suivi d'un processus industriel de fabrication sont calculés à partir d'une moyenne $\mu$ et d'un écart-type $\sigma$ de la dimension caractéristique mesurée sur plusieurs pièces. Plus précisément, $\mu$ correspond à la moyenne du décentrage mesuré pour la dimension caractéristique par rapport à la valeur de référence pour cette dimension caractéristique.

On peut par exemple citer le coefficient de centrage, noté Cc, qui représente un bridage imposé aux variations de la moyenne $\mu$ à l'intérieur de l'intervalle de tolérance IT. L'intervalle de tolérance IT est l'écart entre les valeurs extrêmes admissibles de la dimension caractéristique, étant donc calculé comme la différence entre la tolérance supérieure TS et la tolérance inférieure TI de la dimension caractéristique mesurée, soit IT = TS - TI. Le coefficient de centrage Cc est généralement défini par la formule :

$$Cc = \frac{\bar{\mu}}{(TS - TI)/2}$$

Le processus de fabrication peut aussi être piloté en étudiant des indices de capabilité qui caractérisent la performance réelle du procédé par rapport à la performance souhaitée. De tels indices permettent en effet de mesurer la capacité du processus de fabrication à réaliser des pièces dont les dimensions caractéristiques sont comprises dans l'intervalle de tolérance IT souhaité.

On peut par exemple se référer à l'indice de capabilité procédé Cp qui représente l'aptitude d'un procédé de fabrication de produire des pièces de manière précise et répétable. Plus l'indice de capabilité Cp est grand et plus les pièces fabriquées vont se ressembler, tandis que si l'indice de capabilité Cp est faible, la production sera dispersée. L'indice de capabilité procédé Cp est défini généralement par la formule :

$$Cp = \frac{(TS - TI)/2}{3\sigma}$$

L'inconvénient d'un tel indice de capabilité procédé Cp est qu'un résultat positif (c'est-à-dire élevé) peut aussi correspondre à une production en dehors des limites de la tolérance. En effet, la conformité industrielle d'un flux de fabrication dépend de l'étendue, c'est-à-dire non seulement de sa dispersion mais aussi de la position de sa moyenne par rapport à l'intervalle de tolérance IT. Un autre indice de capabilité utilisé est donc l'indice de capabilité Cpk qui représente la dispersion mais également le centrage de la production par rapport aux limites de la tolérance. Dans ce cas, lorsque l'indice de capabilité Cpk est élevé, cela signifie que la production est répétable et qu'elle est en outre bien centrée dans l'intervalle de tolérance IT, c'est-à-dire qu'il y aura moins de risque que des pièces soient fabriquées en dehors des tolérances. L'indice de capabilité Cpk est défini généralement par la formule :

$$Cpk = \frac{Min(TS - \mu \, ; \, \mu - TI)}{3\sigma}$$

Il existe bien entendu d'autres indicateurs statistiques ayant des propriétés spécifiques, et pouvant être utilisés en fonction des besoins de pilotage du processus de fabrication.

La fabrication de pièces mécaniques est toutefois souvent très complexe, impliquant plusieurs étapes de fabrication et de nombreuses dimensions caractéristiques qui doivent être maitrisées et contrôlées pour que la pièce finale réponde aux critères de fabrication recherchés.

Ainsi, lorsqu'il existe une exigence dimensionnelle particulière sur une pièce à fabriquer, cette exigence fonctionnelle portant généralement sur une dimension spécifique de la pièce, elle est en général le résultat d'une succession d'étapes de fabrication différentes, par exemple une succession d'usinages différents, correspondant à autant de dimensions caractéristiques intermédiaires. Dans de tels cas, on peut assimiler cette exigence dimensionnelle globale à une chaîne de cotes, où chacune des cotes correspond à une dimension caractéristique de la pièce.

L'une des possibilités de suivi de la production de telles pièces peut consister à se focaliser sur ladite exigence dimensionnelle globale et à ne contrôler que la dimension spécifique correspondante, c'est-à-dire une fois que la pièce a été complètement usinée. Toutefois, un tel suivi de production n'est pas satisfaisant puisqu'il ne permet que de valider ou exclure une production, et ne permet pas de venir corriger l'usinage en cours de fabrication.

Un suivi de production plus courant, qui permet d'avoir des mesures prédictives et correctrices en cours de fabrication, consiste donc à contrôler les différentes dimensions caractéristiques de la chaîne de cotes formant la dimension spécifique. Ainsi, si l'une des dimensions caractéristiques s'écarte du domaine d'acceptation correspondant pour que la pièce finale ait une dimension spécifique acceptable, alors on peut agir sur la pièce pendant sa fabrication, par exemple en apportant des corrections d'usinage, de sorte à obtenir une pièce finale acceptable.

Le problème est qu'il existe certaines dimensions caractéristiques dont la formation n'est pas ou peu maitrisable et/ou qui ne peuvent pas ou peu être rectifiées après avoir été réalisées. La dimension spécifique de la pièce finale ne peut dans ce cas pas être totalement contrôlée pendant la production, sauf à imposer des domaines d'acceptation très contraints aux différentes dimensions caractéristiques dont la fabrication est maitrisable, ce qui augmente les taux de rébus et/ou de rectification de pièces en cours de fabrication.

Un but de la présente invention est donc de fournir un procédé de suivi d'un flux de fabrication de pièces qui permet de résoudre au moins l'un des inconvénients précités.

En particulier, un but de la présente invention est de fournir un procédé de suivi d'un flux de fabrication de pièces devant satisfaire à une exigence dimensionnelle globale ayant un taux de rébus plus faible et/ou un taux de rectification de pièces en cours de fabrication plus faible.

Un but de la présente invention est notamment de fournir un procédé amélioré pour le suivi d'un flux de fabrication de pièces devant satisfaire à une exigence dimensionnelle globale et où l'une des dimensions caractéristiques de fabrication n'est pas ou peu maitrisable, et/ou que cette dimension ne peut pas ou peu être rectifiée.

EXPOSE DE L'INVENTION

A cette fin, on propose un procédé de fabrication de pièces produites avec un dispositif de fabrication, où chaque pièce doit satisfaire à une exigence dimensionnelle globale sur une dimension spécifique de ladite pièce, ladite exigence dimensionnelle globale étant assimilée à une chaîne de cotes comprenant au moins deux cotes, chaque cote correspondant à une dimension caractéristique de la pièce, dans lequel :

- L'exigence dimensionnelle globale est fixée pour que la dimension spécifique des pièces ait une moyenne $\mu_G$ et un écart-type $\sigma_G$ compris dans un domaine d'acceptation global construit à partir d'un ou plusieurs critères statistiques ;
- On sélectionne une dimension de référence parmi les dimensions caractéristiques composant la chaîne de cotes, et on calcule à partir d'un échantillon de pièces prélevées parmi les pièces produites avec le dispositif de fabrication une moyenne $\mu_{ref}$ et un écart-type $\sigma_{ref}$ de ladite dimension de référence ;
- On calcule à partir du domaine d'acceptation global et à partir de la moyenne $\mu_{ref}$ et l'écart-type $\sigma_{ref}$ calculés pour la dimension de référence un domaine d'acceptation pour les autres dimensions caractéristiques de la chaîne de cotes, le domaine d'acceptation étant construit avec le ou les mêmes critères statistiques que le domaine d'acceptation global ;
- On pilote le flux de fabrication de pièces sans vérification de la dimension de référence en utilisant le domaine d'acceptation calculé pour les autres dimensions caractéristiques de la chaîne de cotes, de préférence en ajustant des paramètres de réglage du dispositif de fabrication pour que chacune des autres dimensions caractéristiques de la chaîne de cotes soient comprise dans le domaine d'acceptation calculé correspondant.

De préférence, on pilote la fabrication de pièces en effectuant les étapes successives suivantes pour chaque échantillon de pièces prélevé :

- mesure pour chaque pièce de l'échantillon des autres dimensions caractéristiques à l'exception de la dimension de référence ;
- calcul pour chacune des autres dimensions caractéristiques mesurées d'une moyenne $\mu_i$ et d'un écart-type $\sigma_i$ ;
- ajustement des paramètres de réglage du dispositif de fabrication pour que chacune des autres dimensions caractéristiques de la chaîne de cotes ait une moyenne $\mu_i$ et un écart-type $\sigma_i$ compris dans le domaine d'acceptation calculé correspondant.

Chacune des étapes présentées est de préférence faite de façon automatisée.

L'étape de mesure des dimensions caractéristiques peut être faite avec un dispositif de mesure, comprenant par exemple des capteurs permettant de réaliser une mesure automatisée de dimensions spécifiques de la pièce.

Les étapes de calcul peuvent être faites par tout dispositif de calcul approprié, tel que par exemple des moyens de traitement de données informatiques, tel qu'un ordinateur.

L'étape de pilotage peut par exemple être réalisée par un dispositif de pilotage intégrant des moyens de traitement pour intégrer et traiter les données issues des étapes de calcul, afin de corriger tout écart détecté dans la production et corriger le flux de production. En particulier, le dispositif de pilotage est prévu pour corriger les paramètres d'entrée du dispositif de production dont sont issues les pièces.

Le dispositif de pilotage vient donc de préférence ajuster les paramètres de réglage du dispositif de fabrication utilisé pour fabriquer les pièces afin que certaines dimensions caractéristiques de la chaîne de cotes ait une moyenne $\mu_i$ et un écart-type $\sigma_i$ compris dans le domaine d'acceptation calculé correspondant.

Des aspects préférés mais non limitatifs de ce procédé, pris seuls ou en combinaison, sont les suivants :

- le domaine d'acceptation des autres dimensions caractéristiques de la chaîne de cotes est calculé à partir des valeurs limites de moyenne $\mu_{GL}$ et d'écart-type $\sigma_{GL}$ formant le domaine d'acceptation global pour la dimension spécifique et à partir de la moyenne $\mu_{ref}$ et de l'écart-type $\sigma_{ref}$ calculés pour la dimension de référence.
- le domaine d'acceptation des autres dimensions caractéristiques de la chaîne de cotes est calculé en prenant $\mu_i = \mu_{GL} - \mu_{ref}$ et $\sigma_i = \sqrt{\sigma^2_{GL} - \sigma^2_{ref}}$ , où $\mu i$ et $\sigma i$ sont respectivement la moyenne et l'écart-type de la dimension caractéristique correspondante.

- les limites du domaine d'acceptation des autres dimensions caractéristiques de la chaîne de cotes sont calculées en prenant les valeurs limites les plus strictes pour le ou les critères statistiques utilisés.
- les différents domaines d'acceptation sont représentés sur un graphique de pilotage ($\mu$ ;$\sigma$) ayant en abscisse la moyenne $\mu$ et en ordonnée l'écart-type $\sigma$ de la dimension caractéristique et sont construits selon les limites du ou des critères statistiques utilisés pour l'exigence dimensionnelle globale.
- le domaine d'acceptation des autres dimensions caractéristiques de la chaîne de cotes est construit graphiquement selon les étapes successives suivantes :

  ◦ Appliquer au domaine d'acceptation globale dans le graphique de pilotage ($\mu$ ;$\sigma$) une transformée selon la moyenne $\mu_{ref}$ et de l'écart-type $\sigma_{ref}$ calculés pour la dimension de référence ; puis
  ◦ Extrapoler le domaine d'application globale transformé pour construire le domaine d'application des autres dimensions caractéristiques de la chaîne de cotes en prenant les valeurs limites les plus strictes pour le ou les critères statistiques utilisés.

- graphique de pilotage ($\mu$ ;$\sigma$) est affiché sur un moniteur de contrôle.
- le domaine d'acceptation global est construit à partir d'un ou plusieurs indicateurs statistiques choisi parmi :

  ◦ un premier indice de capabilité Cpk défini par la formule :

  $$Cpk = \frac{Min(TS - \mu \,;\, \mu - TI)}{3\sigma}$$

  ◦ un deuxième indice de capabilité Cp défini par la formule :

  $$Cp = \frac{(TS - TI)/2}{3\sigma}$$

  ◦ un coefficient de centrage Cc défini par la formule :

  $$Cc = \frac{\mu}{(TS - TI)/2}$$

  où :

○ μ est une moyenne et σ un écart-type d'une dimension caractéristique mesurée sur plusieurs pièces ;

○ TS est une tolérance supérieure de la dimension caractéristique mesurée ;

○ TI est une tolérance inférieure de la dimension caractéristique mesurée.

- la dimension de référence sélectionnée correspond à la dimension caractéristique ayant des paramètres de fabrication les moins maitrisables parmi les différentes dimensions caractéristiques composant la chaîne de cotes.

Selon un mode de réalisation préféré de ce procédé, la chaîne de cotes comprend uniquement deux cotes correspondant respectivement à une première dimension caractéristique et une deuxième dimension caractéristique de la pièce, dans lequel :

- La dimension de référence correspond à la première dimension caractéristique de la chaîne de cotes ;
- On calcule à partir du domaine d'acceptation global et à partir de la moyenne $\mu_{ref}$ et l'écart-type $\sigma_{ref}$ calculés pour la première dimension caractéristique le domaine d'acceptation de la deuxième dimension caractéristique de la chaîne de cotes, le domaine d'acceptation étant construit avec le ou les mêmes critères statistiques que le domaine d'acceptation global ;
- On pilote le flux de fabrication de pièces sans vérification de la première dimension caractéristique en utilisant le domaine d'acceptation calculé pour la deuxième dimension caractéristique de la chaîne de cotes, par exemple en ajustant des paramètres de réglage du dispositif de fabrication pour que la deuxième dimension caractéristique de la chaîne de cotes soit comprise dans le domaine d'acceptation calculé correspondant.

## DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :

- la figure 1 illustre schématiquement les contraintes dues à une exigence dimensionnelle dépendant de plusieurs dimensions caractéristiques particulières, dans l'exemple particulier du dépôt d'une couche de barrière thermique dans une section de passage d'une pièce mécanique ;
- la figure 2 est un graphique de densité de probabilité illustrant la variabilité de la couche de barrière thermique ;
- la figure 3 est un graphique en $(\mu ; \sigma^2)$ illustrant l'évolution de la section de passage avant et après le dépôt de la couche barrière ;

- la figure 4 est un graphique en $(\mu ; \sigma^2)$ illustrant la détermination du domaine d'acceptabilité de la section de passage avant dépôt de la couche barrière en fonction des valeurs statistiques de la couche barrière et du domaine d'acceptabilité de la section de passage avant dépôt de la couche barrière ;
- la figure 5 est un graphique en $(\mu ; \sigma)$ illustrant la détermination du domaine d'acceptabilité de la section de passage avant dépôt de la couche barrière en fonction des valeurs statistiques de la couche barrière et du domaine d'acceptabilité de la section de passage avant dépôt de la couche barrière ;
- la figure 6 est un graphique en $(\delta ; \sigma)$ illustrant l'étape finale d'extrapolation pour déterminer le domaine d'acceptabilité de la section de passage avant dépôt de la couche barrière.
- La figure 7 est un schéma illustrant une chaine de production intégrant un contrôle et pilotage de la production avec échantillonnage de pièces.

## DESCRIPTION DETAILLEE DE L'INVENTION

Le principe général de l'invention consiste à assimiler une exigence dimensionnelle portant sur une caractéristique dimensionnelle spécifique à une chaîne de cotes, où chaque cote correspond à une dimension caractéristique de la pièce.

On identifie parmi les différentes dimensions caractéristiques formant la chaîne de cotes celle dont l'usinage est le moins maitrisable et/ou dont la rectification est la plus difficile. Cette dimension caractéristique est sélectionnée et sert de référence pour le suivi de la production des pièces, on l'appelle dimension de référence.

Un usinage peu ou pas maitrisable est un usinage dont le résultat est très aléatoire malgré des paramètres d'entrée identiques et des conditions de fabrication identiques.

Les autres dimensions caractéristiques de la chaîne de cotes vont servir de variables d'ajustement pour satisfaire à l'exigence dimensionnelle requise en prenant en compte les valeurs de la dimension de référence.

L'assemblage final voit sa conformité sanctionnée par des tolérances statistiques, comprenant par exemple un coefficient de centrage Cc et un indice de capabilité Cpk. Ainsi, il est avantageux de prendre en compte l'impact de la cote non maîtrisée, dite dimension de référence, sur l'assemblage final non seulement en termes de décentrage de la moyenne mais aussi en termes de dispersion engendrée sur les valeurs enregistrées.

Ainsi, selon le procédé de suivi proposé, on calcule à partir d'un échantillon de pièces prélevées dans le flux de fabrication une moyenne $\mu_{ref}$ et un écart-type $\sigma_{ref}$ de la dimension de référence sélectionnée, où $\mu_{ref}$ est la moyenne du décentrage $\delta$ mesuré sur l'échantillon concernant la dimension de référence, et $\sigma_{ref}$ est l'écart-type mesuré sur l'échantillon.

L'exigence dimensionnelle globale est fixée pour que la dimension spécifique des pièces ait une moyenne $\mu_G$ et un écart-type $\sigma_G$ compris dans un domaine d'acceptation global construit à partir d'un ou plusieurs critères statistiques. Le domaine d'acceptation globale peut par exemple être construit à partir d'un coefficient de centrage Cc et d'un indice de capabilité Cpk dont on souhaite que les valeurs soient comprises dans certaines limites.

Connaissant le domaine d'acceptation global de la dimension spécifique pour qu'une pièce soit acceptable en termes de production, et ayant calculé la moyenne $\mu_{ref}$ et l'écart-type $\sigma_{ref}$ pour la dimension de référence, on peut calculer un domaine d'acceptation pour les autres dimensions caractéristiques de la chaîne de cotes, ce domaine d'acceptation étant de préférence construit avec le ou les mêmes critères statistiques que le domaine d'acceptation global.

Ainsi, en contrôlant que la ou les autres dimensions caractéristiques sont à l'intérieur du domaine d'acceptation ainsi calculé, on s'assure que la dimension spécifique reste également dans son domaine d'acceptation global, et donc que l'exigence dimensionnelle pour la pièce soit respectée, permettant donc de valider la pièce analysée.

Par conséquent, le flux de fabrication de pièces est piloté sans avoir à vérifier la dimension de référence au cours du suivi, en utilisant uniquement le domaine d'acceptation calculé pour les autres dimensions caractéristiques de la chaîne de cotes.

Un tel procédé est particulièrement avantageux puisque cela permet de s'assurer du respect de l'exigence dimensionnelle globale, qui peut être complexe, sans avoir à être trop strict pour ce qui concerne les dimensions caractéristiques puisque la méthode prend en compte non seulement la moyenne $\mu_{ref}$ de la dimension de référence mais également son écart type $\sigma_{ref}$.

De manière préférée, le domaine d'acceptation des autres dimensions caractéristiques de la chaîne de cotes est calculé à partir des valeurs limites de moyenne $\mu_{GL}$ et d'écart-type $\sigma_{GL}$ formant le domaine d'acceptation global pour la dimension spécifique et à partir de la moyenne $\mu_{ref}$ et de l'écart-type $\sigma_{ref}$ calculés pour la dimension de référence.

Selon un mode de réalisation particulier, le domaine d'acceptation des autres dimensions caractéristiques de la chaîne de cotes est calculé en prenant $\mu_i = \mu_{GL} - \mu_{ref}$ et $\sigma_i = \sqrt{\sigma^2_{GL} - \sigma^2_{ref}}$ , où $\mu_i$ et $\sigma_i$ sont respectivement la moyenne et l'écart-type de la dimension caractéristique correspondante.

Selon ce calcul, on peut définir les limites du domaine d'acceptation des dimensions caractéristiques de la chaîne de cotes en prenant les valeurs limites les plus strictes pour le ou les critères statistiques utilisés.

De préférence, le domaine d'acceptation calculé est valable pour l'ensemble des autres dimensions caractéristiques de la chaîne de cotes.

Dans le mode de réalisation où la chaîne de cotes comprenant uniquement deux cotes alors on prend comme dimension de référence l'une des deux dimensions caractéristiques de la chaîne de cotes, puis on calcule - à partir du domaine d'acceptation global et à partir de la moyenne $\mu_{ref}$ et l'écart-type $\sigma_{ref}$ calculés pour la dimension de référence - le domaine d'acceptation de l'autre dimension caractéristique de la chaîne de cotes, ce domaine d'acceptation étant de préférence construit avec le ou les mêmes critères statistiques que le domaine d'acceptation global. On pilote ensuite le flux de fabrication de pièces sans vérification de la dimension de référence en utilisant le domaine d'acceptation calculé pour la deuxième dimension caractéristique de la chaîne de cotes.

La présente invention est décrite ci-dessous en référence à un exemple particulier mais non limitatif de la production d'aubes mobiles pour moteurs dans le domaine de l'aéronautique, ou toute pièce similaire, dont une section de passage doit être recouverte d'une couche de barrière thermique.

Une telle couche de barrière thermique influe de manière non-négligeable sur la section de passage de ces aubages. Or les sections de passage de nombreux aubages font l'objet d'une définition statistique, imposée par l'utilisation finale du produit, ce qui correspond à l'exigence dimensionnelle globale.

Le procédé de dépôt de barrière thermique, quoi que très répétable en général, est difficile à maîtriser, et plus encore à rectifier. Pour cette raison, lorsque l'on observe des non-conformités vis-à-vis des critères statistiques imposés à la section de passage, agir sur le dépôt de barrière thermique n'est généralement pas envisageable. La seule possibilité est d'agir sur la valeur de la section de passage de la pièce après usinage et avant dépôt de barrière thermique, ce qui est possible en usinant différemment le pied de la pièce.

Il existe pour la section de passage avant dépôt de barrière thermique une valeur inscrite au plan, avec un nominal et des tolérances, mais ce nominal et ces tolérances font l'hypothèse d'un dépôt standard de barrière thermique, qui devra conduire en final à une section de passage conforme, c'est-à-dire étant dans le domaine d'acceptabilité global de la dimension spécifique.

Or lorsque l'on observe des écarts à la spécification lors du dépôt de barrière thermique (ou que la spécification en termes de dépôt de barrière thermique a changé, sans que le besoin final ait été modifié), le respect de ce nominal et de ces tolérances avant dépôt de barrière thermique engendre des non-conformités sur la section de passage après barrière thermique. Il convient donc de connaitre quel nouveau nominal et quelles nouvelles tolérances on doit appliquer à la section de passage de la pièce avant dépôt de barrière thermique pour que soient respectés les critères individuels et statistiques qui statuent sur la conformité de la production.

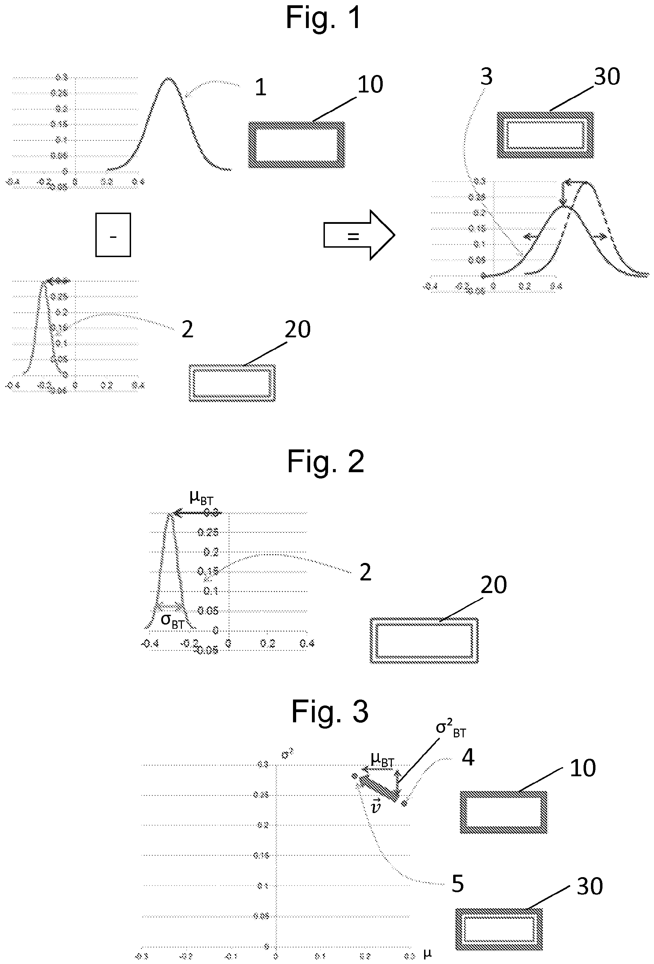

Ce problème est schématisé à la figure 1 où sont illustrées la variabilité 1 de la section de passage avant barrière thermique 10, la variabilité 2 de la barrière thermique 20, et la variabilité 3 de la section de passage après barrière thermique 30. On constate sur cette figure 1 que la section de passage est plus faible en raison du dépôt de la barrière thermique, ce qui est logique, mais surtout qu'elle est plus dispersée en raison de la variabilité de la barrière thermique.

Cet exemple particulier de dépôt d'une couche barrière dans une section de passage peut s'assimiler à une chaîne de cotes à deux maillons, l'un des maillons (l'épaisseur de barrière thermique déposée) étant non maîtrisable, et l'autre des maillons (la section de passage avant dépôt de barrière thermique) ayant pour vocation de servir de variable d'ajustement afin de garantir en final la conformité de l'assemblage.

L'assemblage final verra sa conformité sanctionnée par des tolérances statistiques, consistant classiquement en un Cpk et un Cc. C'est la raison pour laquelle il est important de prendre en compte l'impact de la cote non maîtrisée sur l'assemblage final non seulement en termes de décentrage de la moyenne mais aussi de dispersion engendrée sur les valeurs enregistrées.

L'assemblage d'une valeur de section de passage avant barrière thermique ayant pour caractéristiques une moyenne $\mu_{SdP\ avant\ BT}$ et un écart-type $\sigma_{SdP\ avant\ BT}$, avec un dépôt de barrière thermique entraînant une obstruction de la section de passage ayant pour caractéristiques une moyenne $\mu_{BT} < 0$ (puisque le dépôt d'une couche barrière vient réduire la section de passage) et un écart-type $\sigma_{BT}$ pour former une section de passage finale ayant pour caractéristiques une moyenne $\mu_{SdP\ finale}$ et un écart-type $\sigma_{SdP\ finale}$ devant répondre à certains critères se traduit par les relations suivantes :

$$\mu_{SdP\ finale} = \mu_{SdP\ avant\ BT} + \mu_{BT}$$

$$\sigma^2_{SdP\ finale} = \sigma^2_{SdP\ avant\ BT} + \sigma^2_{BT}$$

On peut utiliser un outil graphique appelé « Plan Variance-décentrage » dans lequel est porté en abscisse la moyenne $\mu$ du décentrage et en ordonnées la variance (c'est-à-dire le carré de l'écart-type $\sigma$). Dans ce graphique, chaque population est par conséquent représentée par un point.

Les relations ci-dessus se traduisent par le fait que le dépôt de barrière thermique a pour effet de translater la population des sections de passage de la pièce dans le plan variance-décentrage d'un vecteur $\vec{v}$ de coordonnées ($\mu_{BT}$; $\sigma^2_{BT}$).

Si l'on considère une variabilité de la barrière thermique 20 telle qu'illustrée à la figure 2, caractérisée par une moyenne $\mu_{BT}$ et un écart-type $\sigma_{BT}$, on peut représenter la translation dans le plan variance-décentrage comme sur le graphique de la figure 3 où le point 4 correspond à la section de la passage avant barrière thermique, tandis que le point 5 correspond à la section de la passage après barrière thermique.

La solution technique proposée consiste à représenter dans le diagramme variance-décentrage le domaine d'acceptation contenant toutes les populations de sections de passage après dépôt de barrière thermique admissibles au vu des critères statistiques inscrits au plan de fabrication.

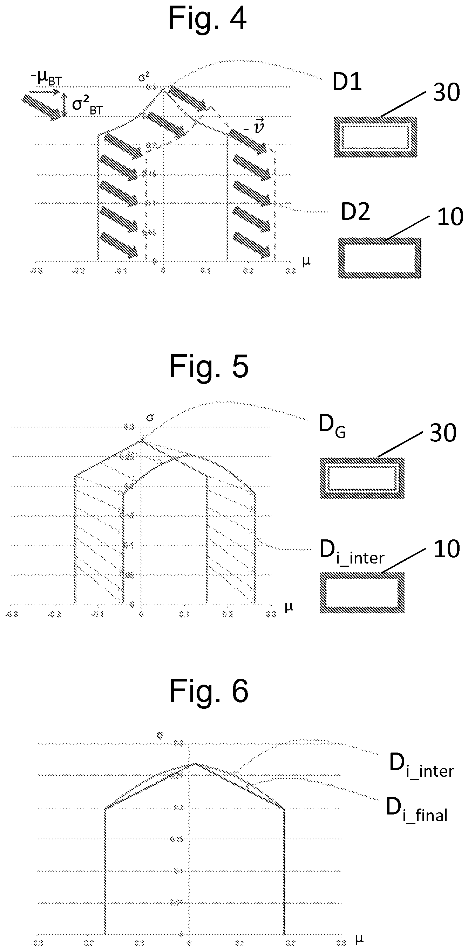

Typiquement, dans le cas où les critères statistiques consistent en un Cpk et un Cc inférieurs à 1, ce domaine d'acceptation D1 ressemble à un chapiteau surélevé par des murs comme cela est représenté à la figure 4. On décale ensuite ce domaine d'acceptation D1 d'un vecteur $-\vec{v}$, pour obtenir le domaine d'acceptation D2 dans lequel devra se situer la population de sections de passage avant dépôt de barrière thermique de façon à répondre, après dépôt de barrière thermique (matérialisé par une translation de vecteur $\vec{v}$ dans ce graphique) aux critères « section de passage après dépôt de barrière thermique » inscrits au plan.

Comme on le voit au graphique de la figure 4, le domaine d'acceptation D2 pour les sections de passage avant dépôt de barrière thermique ainsi construit tolère des sections de passage plus grandes (car l'effet de la barrière thermique est d'obstruer la section de passage), mais moins dispersées (car la dispersion engendrée par le dépôt de barrière thermique s'ajoute à celle initialement présente dans la population avant dépôt de barrière thermique).

Pour faciliter la lecture graphique des domaines d'acceptation, il est préférable d'utiliser des diagrammes de type écart-type-décentrage, que l'on appelle également diagrammes ($\mu$ ;$\sigma$), dans lequel est porté en abscisse la moyenne $\mu$ du décentrage et en ordonnées l'écart-type $\sigma$.

Dans un tel type de graphique, la représentation des critères statistiques et leurs limites d'acceptation respectives définissant les différents domaines d'acceptation est plus simple, et donc beaucoup facile à mettre en oeuvre.

Par exemple, dans ce type de diagramme ($\mu$ ;$\sigma$), les iso-Cc sont représentées par des droites verticales et les iso-Cpks par des droites obliques coupant l'axe des abscisses au niveau des tolérances.

Ainsi un domaine d'acceptation global $D_G$, c'est-à-dire le domaine d'acceptation de la section de passage après dépôt de barrière thermique, défini par un coefficient de centrage Cc et un indice de capabilité Cpk, possède l'apparence d'une maison comme on le voit représenté à la figure 5.

Ici toutefois, l'effet du dépôt de la barrière thermique sur une population représentée par un point dans ce diagramme ne s'apparente pas à une translation simple du domaine d'acceptation global.

On calcule donc le domaine d'acceptation $D_{i\_inter}$ des valeurs de la section de passage de avant dépôt de la barrière thermique en prenant :

$$\mu_{SdP\ avant\ BT} = \mu_{SdP\ finale} - \mu_{BT}$$

$$\sigma_{SdP\ avant\ BT} = \sqrt{\sigma^2_{SdP\ finale} - \sigma^2_{BT}}$$

On passe donc par le diagramme variance-décentrage pour construire ce domaine, et on le convertit dans le diagramme $\mu$-$\sigma$ pour en quantifier les bornes en termes de tolérances, de Cc et de Cpk. Ceci est illustré à la figure 5.

Le nouveau domaine d'acceptation $D_{i\_inter}$ ainsi calculé, dans le plan $\mu$-$\sigma$, n'a plus la même forme que le domaine initial puisqu'il n'est pas un simple translaté du domaine d'acceptation global.

Par exemple, lorsque le domaine d'acceptation après dépôt de barrière thermique est construit par l'imposition d'un Cpk et un Cc, le domaine d'acceptation après dépôt de barrière thermique $D_G$ dans le plan $\mu$-$\sigma$ a la forme d'une maison, tandis que le domaine d'acceptation avant dépôt de barrière thermique $D_{i\_inter}$ construit par la méthode décrite ci-dessus ressemble à une croisée d'ogives surélevée par deux murs comme on le voit à la figue 5.

Si l'on souhaite délimiter le domaine d'acceptation avant dépôt de barrière thermique par des critères statistiques similaires à ceux employés pour la section de passage après dépôt de barrière thermique, c'est-à-dire un coefficient de centrage Cc et un indice de capabilité Cpk, il suffit alors d'inscrire une maison dans la croisée d'ogives, et ainsi calculer le domaine d'acceptation $D_{i\_final}$ recherché (voir figure 6). La détermination de ce domaine d'acceptation $D_{i\_final}$ peut être faite par calcul ou par extrapolation graphique.

Le procédé proposé est particulièrement avantageux puisqu'il prend en compte l'impact du processus défaillant, c'est-à-dire de la dimension dont la fabrication est peu maitrisée et/ou peu rectifiable, non seulement en termes de moyenne du décentrage, mais aussi en termes de dispersion.

Un premier raisonnement naïf conduisait à simplement « dégraisser » le nominal avant barrière thermique de la valeur moyenne de l'écart observé dans le dépôt de barrière thermique.

Pour reprendre l'exemple ci-dessus de la section de passage avec dépôt d'une couche de barrière thermique, le procédé proposé permet de prendre en compte le fait que la variabilité observée sur l'épaisseur déposée de barrière thermique se répercute sur la section de passage. Cela permet d'éviter des cas où une production bonne au regard des exigences statistiques - dans le référentiel décalé de l'écart moyen observé sur le dépôt de barrière thermique - se retrouvait sanctionnée mauvaise après dépôt de barrière thermique, parce que sa dispersion conduisait à la juger inacceptable au regard des exigences statistiques après dépôt de barrière thermique.

Le procédé proposé peut être mis en oeuvre dans une chaîne de fabrication de pièces, pouvant être totalement ou partiellement automatisée, où des contrôles en cours de production permettent de piloter le flux de fabrication, c'est-à-dire ajuster les conditions de fabrication pour s'assurer que les pièces fabriquées continuent de répondre aux critères de qualités requis.

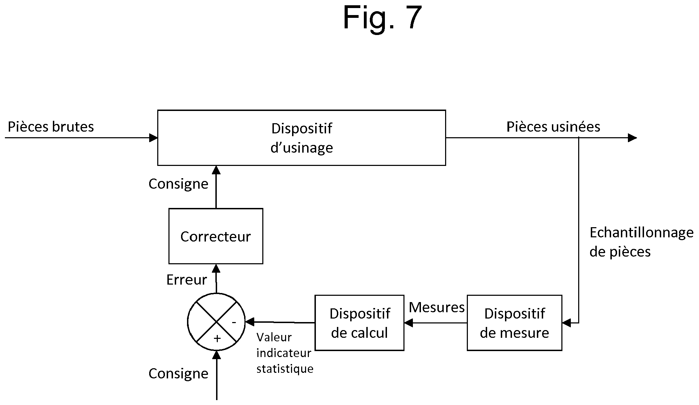

La figure 7 donne un exemple d'une telle chaine de fabrication dans laquelle un dispositif d'usinage, comme par exemple une machine 5 axes, est utilisé pour fabriquer des pièces selon une consigne spécifique. La consigne spécifique peut par exemple porter sur une exigence dimensionnelle globale. A la place du dispositif d'usinage, il pourrait bien entendu être utilisé un dispositif de fabrication non limité à de l'usinage de pièces.

Dans cette chaine automatisée de production, des pièces sont prélevées en sortie du dispositif d'usinage afin de former un échantillon et transmise à un dispositif de mesure qui mesure une ou plusieurs dimensions caractéristiques de chaque pièce de l'échantillon prélevé. Un tel dispositif de mesure peut par exemple être une machine de mesure tridimensionnelle ayant des capteurs qui mesurent automatiquement les dimensions caractéristiques souhaitées de chacune des pièces.

Les données de mesures issues du dispositif de mesure sont ensuite transmises à un dispositif de calcul qui les traite pour calculer un ou plusieurs indicateurs statistiques représentatifs d'une des dimensions caractéristiques des pièces.

La valeur calculée de l'indicateur statistique est ensuite comparée à une consigne de référence sur la dimension caractéristique afin de piloter le flux de fabrication. Plus précisément, les résultats de cette comparaison permettent d'éventuellement ajuster les paramètres d'entrée du dispositif d'usinage.

Si un écart est constaté, impliquant une erreur, par exemple si la valeur de l'indicateur statistique sur la dimension caractéristique est en dehors d'une plage acceptable définie par la consigne de référence, des mesures correctrices sont déterminées par un correcteur afin d'ajuster les paramètres d'entrée du dispositif d'usinage. L'objectif des modifications des paramètres d'entrée du dispositif d'usinage est de corriger l'écart constaté, pour que la valeur de l'indicateur statistique sur la dimension caractéristique soit de nouveau dans une plage acceptable.

**Revendications**

1. Procédé de fabrication de pièces produites avec un dispositif de fabrication, où chaque pièce doit satisfaire à une exigence dimensionnelle globale sur une dimension spécifique de ladite pièce, ladite exigence dimensionnelle globale étant assimilée à une chaîne de cotes comprenant au moins deux cotes, chaque cote correspondant à une dimension caractéristique de la pièce, dans lequel :

- L'exigence dimensionnelle globale est fixée pour que la dimension spécifique des pièces ait une moyenne $\mu_G$ et un écart-type $\sigma_G$ compris dans un domaine d'acceptation global construit à partir d'un ou plusieurs critères statistiques ;
- Une dimension de référence est sélectionnée parmi les dimensions caractéristiques composant la chaîne de cotes, où la dimension de référence sélectionnée correspond à la dimension caractéristique ayant des paramètres de fabrication les moins maitrisables parmi les différentes dimensions caractéristiques composant la chaîne de cotes ; et

le procédé comprenant les étapes automatisées suivantes consistant à :

- calculer, avec un dispositif de calcul, à partir d'un échantillon de pièces prélevées parmi les pièces produites avec le dispositif de fabrication une moyenne $\mu_{ref}$ et un écart-type $\sigma_{ref}$ de ladite dimension de référence ;
- calculer, avec le dispositif de calcul, à partir du domaine d'acceptation global et à partir de la moyenne $\mu_{ref}$ et l'écart-type $\sigma_{ref}$ calculés pour la dimension de référence un domaine d'acceptation pour les autres dimensions caractéristiques de la chaîne de cotes, le domaine d'acceptation étant construit avec le ou les mêmes critères statistiques que le domaine d'acceptation global ; puis
- piloter, avec un dispositif de pilotage, la fabrication de pièces sans vérification de la dimension de référence en utilisant le domaine d'acceptation calculé pour les autres dimensions caractéristiques de la chaîne de cotes en ajustant des paramètres de réglage du dispositif de fabrication pour que chacune des autres dimensions caractéristiques de la chaîne de cotes soit comprise dans le domaine d'acceptation calculé correspondant.

**2.** Procédé selon la revendication 1, dans lequel la fabrication de pièces est pilotée en effectuant, de manière automatisée, les étapes successives suivantes pour chaque échantillon de pièces prélevé :

- Mesure, avec un dispositif de mesure, pour chaque pièce de l'échantillon des autres dimensions caractéristiques à l'exception de la dimension de référence ;
- Calcul, avec le dispositif de calcul, pour chacune des autres dimensions caractéristiques mesurées d'une moyenne $\mu_i$ et d'un écart-type $\sigma_i$ ;
- Ajustement, avec le dispositif de pilotage, des paramètres de réglage du dispositif de fabrication pour que chacune des autres dimensions caractéristiques de la chaîne de cotes ait une moyenne $\mu_i$ et un écart-type $\sigma_i$ compris dans le domaine d'acceptation calculé correspondant.

**3.** Procédé de suivi selon l'une quelconque des revendications 1 ou 2, dans lequel le domaine d'acceptation des autres dimensions caractéristiques de la chaîne de cotes est calculé à partir des valeurs limites de moyenne $\mu_{GL}$ et d'écart-type $\sigma_{GL}$ formant le domaine d'acceptation global pour la dimension spécifique et à partir de la moyenne $\mu_{ref}$ et de l'écart-type $\sigma_{ref}$ calculés pour la dimension de référence.

**4.** Procédé de suivi selon la revendication 3, dans lequel le domaine d'acceptation des autres dimensions caractéristiques de la chaîne de cotes est calculé en prenant $\mu_i = \mu_{GL} - \mu_{ref}$ et $\sigma_i = \sqrt{\sigma^2_{GL} - \sigma^2_{ref}}$, où $\mu_i$ et $\sigma_i$ sont respectivement la moyenne et l'écart-type de la dimension caractéristique correspondante.

**5.** Procédé selon la revendication 4, dans lequel les limites du domaine d'acceptation des autres dimensions caractéristiques de la chaîne de cotes sont calculées en prenant les valeurs limites les plus strictes pour le ou les critères statistiques utilisés.

**6.** Procédé selon l'une quelconque des revendications 1 à 5, dans lequel les différents domaines d'acceptation sont représentés sur un graphique de pilotage $(\mu ; \sigma)$ ayant en abscisse la moyenne $\mu$ et en ordonnée l'écart-type $\sigma$ de la dimension caractéristique et sont construits selon les limites du ou des critères statistiques utilisés pour l'exigence dimensionnelle globale.

**7.** Procédé selon la revendication 6, dans lequel le domaine d'acceptation des autres dimensions caractéristiques de la chaîne de cotes est construit graphiquement selon les étapes successives suivantes :

- Appliquer au domaine d'acceptation globale dans le graphique de pilotage $(\mu ; \sigma)$ une transformée selon la moyenne $\mu_{ref}$ et de l'écart-type $\sigma_{ref}$ calculés pour la dimension de référence ; puis
- Extrapoler le domaine d'application globale transformé pour construire le domaine d'application des autres dimensions caractéristiques de la chaîne de cotes en prenant les valeurs limites les plus strictes pour le ou les critères statistiques utilisés.

**8.** Procédé selon l'une quelconque des revendications 6 ou 7, dans lequel le graphique de pilotage (μ ;σ) est affiché sur un moniteur de contrôle.

**9.** Procédé selon l'une quelconque des revendications 1 à 8, dans lequel le domaine d'acceptation global est construit à partir d'un ou plusieurs indicateurs statistiques choisi parmi :

- un premier indice de capabilité Cpk défini par la formule :

$$Cpk = \frac{Min(TS - \mu \; ; \mu - TI)}{3\sigma}$$

- un deuxième indice de capabilité Cp défini par la formule :

$$Cp = \frac{(TS - TI)/2}{3\sigma}$$

- un coefficient de centrage Cc défini par la formule :

$$Cc = \frac{\mu}{(TS - TI)/2}$$

où :

- μ est une moyenne et σ un écart-type d'une dimension caractéristique mesurée sur plusieurs pièces ;
- TS est une tolérance supérieure de la dimension caractéristique mesurée ;
- TI est une tolérance inférieure de la dimension caractéristique mesurée.

**10.** Procédé selon l'une quelconque des revendications 1 à 9, dans lequel la chaîne de cotes comprenant deux cotes correspondant respectivement à une première dimension caractéristique et une deuxième dimension caractéristique de la pièce, dans lequel la dimension de référence correspond à la première dimension caractéristique de la chaîne de cotes, le procédé comprenant en outre les étapes automatisées suivantes consistant à :

- calculer, avec le dispositif de calcul, à partir du domaine d'acceptation global et à partir de la moyenne $\mu_{ref}$ et l'écart-type $\sigma_{ref}$ calculés pour la première dimension caractéristique le domaine d'acceptation de la deuxième dimension caractéristique de la chaîne de cotes, le domaine d'acceptation étant construit avec le ou les mêmes critères statistiques que le domaine d'acceptation global ; et
- piloter, avec le dispositif de pilotage, la fabrication de pièces sans vérification de la première dimension caractéristique en utilisant le domaine d'acceptation calculé pour la deuxième dimension caractéristique de la chaîne de cotes en ajustant des paramètres de réglage du dispositif de fabrication pour que la deuxième dimension caractéristique de la chaîne de cotes soit comprise dans le domaine d'acceptation calculé correspondant.

**Patentansprüche**

**1.** Verfahren zur Herstellung von Teilen, die mit einer Herstellungsvorrichtung hergestellt werden, wobei jedes Teil eine globale Abmessungsanforderung über eine spezifische Abmessung des Teils erfüllen muss, wobei die globale Abmessungsanforderung einer Maßkette gleichgesetzt ist, die mindestens zwei Maße umfasst, wobei jedes Maß einer charakteristischen Abmessung des Teils entspricht, wobei:

- die globale Abmessungsanforderung festgelegt ist, damit die spezifische Abmessung der Teile einen Mittelwert $\mu_G$ und eine Standardabweichung $\sigma_G$ in einem globalen Akzeptanzbereich hat, der auf der Basis von einem oder mehreren statistischen Kriterien aufgebaut ist;
- eine Referenzabmessung aus den charakteristischen Abmessungen ausgewählt wird, welche die Maßkette bilden, wobei die ausgewählte Referenzabmessung der charakteristischen Abmessung entspricht, welche am wenigsten beherrschbare Herstellungsparameter von den verschiedenen charakteristischen Abmessungen hat, welche die Maßkette bilden, und

das Verfahren die folgenden automatisierten Schritte umfasst, die darin bestehen:

- Berechnen, mit einer Rechenvorrichtung, auf der Basis einer Probe von Teilen, die aus den von der Herstellungsvorrichtung produzierten Teilen entnommen wurden, eines Mittelwerts $\mu_{ref}$ und einer Standardabweichung $\sigma_{ref}$ der Referenzabmessung;
- Berechnen, mit der Rechenvorrichtung, auf der Basis des globalen Akzeptanzbereichs und auf der Basis des Mittelwerts $\mu_{ref}$ und der Standardabweichung $\sigma_{ref}$, die für die Referenzabmessung berechnet wurden, eines Akzeptanzbereichs für die anderen charakteristischen Abmessungen der Maßkette, wobei der Akzeptanzbereich mit demselben oder denselben statistischen Kriterien wie der globale Akzeptanzbereich aufgebaut ist; dann

- Steuern, mit einer Steuervorrichtung, die Herstellung der Teile ohne Überprüfung der Referenzabmessung durch Nutzung des für die anderen charakteristischen Abmessungen der Maßkette berechneten Akzeptanzbereichs durch Anpassung der Einstellparameter der Herstellungsvorrichtung, damit jede der anderen charakteristischen Abmessungen der Maßkette in dem entsprechenden berechneten Akzeptanzbereich enthalten ist.

2. Verfahren nach Anspruch 1, wobei die Herstellung von Teilen durch automatische Durchführung der folgenden Schritte für jede entnommene Teileprobe gesteuert wird:

- Messen, mit einer Messvorrichtung, für jedes Teil der Probe der anderen charakteristischen Abmessungen, mit Ausnahme der Referenzabmessung;
- Berechnen, mit der Rechenvorrichtung, für jede der anderen gemessenen charakteristischen Abmessungen eines Mittelwerts $\mu_i$ und einer Standardabweichung $\sigma_i$;
- Anpassen, mit der Steuervorrichtung, der Einstellparameter der Herstellungsvorrichtung, damit jede der anderen charakteristischen Abmessungen der Maßkette einen Mittelwert $\mu_i$ und eine Standardabweichung $\sigma_i$ in dem entsprechenden berechneten Akzeptanzbereich hat.

3. Verfahren zur Nachverfolgung nach einem der Ansprüche 1 oder 2, wobei der Akzeptanzbereich der anderen charakteristischen Abmessungen der Maßkette auf der Basis der Grenzwerte des Mittelwerts $\mu_{GL}$ und der Standardabweichung $\sigma_{GL}$ berechnet werden, welche den globalen Akzeptanzbereich für die spezifische Abmessung bilden, und auf der Basis des für die Referenzabmessung berechneten Mittelwerts $\mu_{ref}$ und der Standardabweichung $\sigma_{ref}$.

4. Verfahren zur Nachverfolgung nach Anspruch 3, wobei der Akzeptanzbereich der anderen charakteristischen Abmessungen der Maßkette durch Heranziehen von $\mu_i = \mu_{GL} - \mu_{ref}$ und $\sigma_i = \sqrt{\sigma^2_{GL} - \sigma^2_{ref}}$ $\sigma_i$ berechnet wird, wobei $\mu_i$ und $\sigma_i$ jeweils der Mittelwert und die Standardabweichung der entsprechenden charakteristischen Abmessung sind.

5. Verfahren nach Anspruch 4, wobei die Grenzen des Akzeptanzbereichs der anderen charakteristischen Abmessungen der Maßkette durch Heranziehen der strengsten Grenzwerte für das oder die verwendeten statistischen Kriterien berechnet werden.

6. Verfahren nach einem der Ansprüche 1 bis 5, wobei die verschiedenen Akzeptanzbereiche auf einer Steuergrafik $(\mu; \sigma)$ mit dem Mittelwert $\mu$ auf der Abszisse und der Standardabweichung $\sigma$ auf der Ordinate der charakteristischen Abmessung dargestellt sind und gemäß den Grenzen des oder der für die globale Abmessungsanforderung verwendeten statistischen Kriterien aufgebaut sind.

7. Verfahren nach Anspruch 6, wobei der Akzeptanzbereich der anderen charakteristischen Abmessungen der Maßkette gemäß den folgenden aufeinanderfolgenden Schritten grafisch aufgebaut ist:

- Anwenden, auf den globalen Akzeptanzbereich in der Steuergrafik $(\mu; \sigma)$, einer Transformation gemäß dem Mittelwert $\mu_{ref}$ und der Standardabweichung $\sigma_{ref}$, berechnet für die Referenzabmessung; dann
- Extrapolieren des transformierten globalen Anwendungsbereichs, um den Anwendungsbereich der anderen charakteristischen Abmessungen der Maßkette durch Heranziehen der strengsten Grenzwerte für das oder die verwendeten statistischen Kriterien aufzubauen.

8. Verfahren nach einem der Ansprüche 6 oder 7, wobei die Steuergrafik $(\mu; \sigma)$ auf einem Kontrollmonitor angezeigt wird.

9. Verfahren nach einem der Ansprüche 1 bis 8, wobei der globale Akzeptanzbereich auf der Basis von einem oder mehreren statistischen Indikatoren aufgebaut ist, ausgewählt aus:

- einem ersten Fähigkeitsindex Cpk, definiert durch die Formel:

$$Cpk = \frac{Min(TS - \mu;\ \mu - TI)}{3\sigma}$$

- einem zweiten Fähigkeitsindex Cp, definiert durch die Formel:

$$Cp = \frac{(TS - TI)/2}{3\sigma}$$

- einem Zentrierkoeffizient Cc, definiert durch die Formel:

$$Cc = \frac{\mu}{(TS - TI)/2}$$

wobei:

- $\mu$ ein Mittelwert und $\sigma$ eine Standardabweichung einer über mehrere Teile gemessenen charakteristischen Abmessung ist;
- TS eine Toleranz ist, die größer als die gemessene charakteristische Abmessung ist;
- TI eine Toleranz ist, die kleiner als die gemessene charakteristische Abmessung ist.

10. Verfahren nach einem der Ansprüche 1 bis 9, wobei die Maßkette zwei Maße umfasst, die jeweils einer ersten charakteristischen Abmessung und einer zweiten charakteristischen Abmessung des Teils entsprechen, wobei die Referenzabmessung der ersten charakteristischen Abmessung der Maßkette entspricht, wobei das Verfahren ferner die folgenden automatisierten Schritte umfasst, die darin bestehen:

- Berechnen, mit der Rechenvorrichtung, auf der Basis des globalen Akzeptanzbereichs und auf der Basis des Mittelwerts $\mu_{ref}$ und der Standardabweichung $\sigma_{ref}$, die für die erste charakteristische Abmessung berechnet wurden, des Akzeptanzbereichs der zweiten charakteristischen Abmessung der Maßkette, wobei der Akzeptanzbereich mit demselben oder denselben statistischen Kriterien wie der globale Akzeptanzbereich aufgebaut ist; und
- Steuern, mit der Steuervorrichtung, der Herstellung von Teilen ohne Überprüfung der ersten charakteristischen Abmessung durch Nutzung des für die zweite charakteristische Abmessung der Maßkette berechneten Akzeptanzbereichs durch Anpassung der Einstellparameter der Herstellungsvorrichtung, damit die zweite charakteristische Abmessung der Maßkette in dem entsprechenden berechneten Akzeptanzbereich enthalten ist.

**Claims**

1. Method of manufacturing parts produced with a manufacturing device, where each part must satisfy an overall dimensional requirement on a specific dimension of said part, said overall dimensional requirement being akin to a tolerance stack-up comprising at least two dimensions, each dimension corresponding to a characteristic dimension of the part, in which:

- the overall dimensional requirement is fixed so that the specific dimension of the parts has an average $\mu_G$ and a standard deviation $\sigma_G$ in an overall area of acceptance constructed from one or more statistical criteria;

- a reference dimension is selected from among the characteristic dimensions comprising the tolerance stack-up, wherein the selected reference dimension corresponds to the characteristic dimension having the least controllable manufacturing parameters from among the different characteristic dimensions forming the tolerance stack-up; and

wherein in an automated way:

- an average $\mu_{ref}$ and a standard deviation $\sigma_{ref}$ of said reference dimension are calculated, with a calculation device, from a sample of parts taken from among the parts produced with the manufacturing device;
- an area of acceptance for the other characteristic dimensions of the tolerance stack-up is calculated, with the calculation device, from the overall area of acceptance and from the average $\mu_{ref}$ and the standard deviation $\sigma_{ref}$ calculated for the reference dimension, the area of acceptance being constructed with the statistical criteria or the same statistical criteria as the overall area of acceptance;
- the manufacturing of parts without verification of the reference dimension is controlled, with a regulating device, by using the area of acceptance calculated for the other characteristic dimensions of the tolerance stack-up by adjusting the regulating parameters of the manufacturing device so that each of the other characteristic dimensions of the tolerance stack-up is included in the corresponding calculated area of acceptance.

2. The method as claimed in Claim 1, in which the manufacturing of parts is controlled by conducting, in an automated way, the following successive steps for each sample of parts taken:

- Measurement, with a measuring device, for each part of the sample of the other characteristic dimensions with the exception of the reference dimension;
- Calculation, with the calculation device, for each of the other measured characteristic dimensions of an average $\mu_i$ and a standard deviation $\sigma_i$;
- Adjustment, with the regulating device, of the regulating parameters of the manufacturing device so that each of the other characteristic dimensions of the tolerance stack-up has an average $\mu_i$ and a standard deviation $\sigma_i$ in the corresponding calculated area of acceptance.

3. The monitoring method as claimed in any one of Claims 1 or 2, in which the area of acceptance of the other characteristic dimensions of the tolerance stack-up is calculated from the limit values of average $\mu_{GL}$ and standard deviation $\sigma_{GL}$ forming the overall area of acceptance for the specific dimension and from the average $\mu_{ref}$ and of the standard deviation $\sigma_{ref}$ calculated for the reference dimension.

4. The monitoring method as claimed in Claim 3, in which the area of acceptance of the other characteristic dimensions of the tolerance stack-up is calculated by taking $\mu_i = \mu_{GL} - \mu_{ref}$ and $\sigma_i = \sqrt{\sigma^2_{GL} - \sigma^2_{ref}}$, where $\mu_i$ and $\sigma_i$ are respectively the average and the standard deviation of the corresponding characteristic dimension.

5. The method as claimed in Claim 4, in which the limits of the area of acceptance of the other characteristic dimensions of the tolerance stack-up are calculated by taking the strictest values limits for the statistical criterion or the statistical criteria used.

6. The method as claimed in any one of Claims 1 to 5, in which the different areas of acceptance are illustrated on a control graphic $(\mu;\sigma)$ having as abscissa the average $\mu$ and as ordinate the standard deviation $\sigma$ of the characteristic dimension and are constructed according to the limits of the statistical criterion or criteria used for the overall dimensional requirement.

7. The method as claimed in Claim 6, in which the area of acceptance of the other characteristic dimensions of the tolerance stack-up is constructed graphically according to the following successive steps:

   - applying to the overall area of acceptance in the control graphic $(\mu;\sigma)$ a transform according to the average $\mu_{ref}$ and the standard deviation $\sigma_{ref}$ calculated for the reference dimension; then
   - extrapolating the overall area of application transformed for constructing the area of application of the other characteristic dimensions of the tolerance stack-up by taking the strictest values limits for the statistical criterion or the statistical criteria used.

8. The method as claimed in any one of Claims 6 or 7, in which the control graphic $(\mu;\sigma)$ is displayed on a control monitor.

9. The method as claimed in any one of Claims 1 to 8, in which the overall area of acceptance is constructed from one or more statistical indicators selected from among:

   - a first capability index Cpk defined by the formula:

$$Cpk = \frac{Min(TS - \mu \,;\, \mu - TI)}{3\sigma}$$

   - a second capability index Cp defined by the formula:

$$Cp = \frac{(TS - TI)/2}{3\sigma}$$

   - a centring coefficient Cc defined by the formula:

$$Cc = \frac{\mu}{(TS - TI)/2}$$

where:

   - $\mu$ is an average and $\sigma$ a standard deviation of a measured characteristic dimension on several parts;
   - TS is an upper tolerance of the measured characteristic dimension;
   - TI is a lower tolerance of the measured characteristic dimension.

10. The method as claimed in any one of Claims 1 to 9, in which the tolerance stack-up comprising two dimensions corresponding respectively to a first characteristic dimension and a second characteristic dimension of the part, in which:

   - the reference dimension corresponds to the first characteristic dimension of the tolerance stack-up;
   - the area of acceptance of the second characteristic dimension of the tolerance stack-up is calculated from the overall area of acceptance and from the average $\mu_{ref}$ and the standard deviation $\sigma_{ref}$ calculated, with the calculation device, for the first characteristic dimension, the area of acceptance being constructed with the statistical criteria or the same statistical criteria as the overall area of acceptance;
   - the manufacturing of parts is controlled, with the regulating device, without verification of the first characteristic dimension by using the area of acceptance calculated for the second characteristic dimension of the tolerance stack-up by adjusting the regulating parameters of the manufacturing device so that the second characteristic dimension of the tolerance stack-up is included in the corresponding calculated area of acceptance.

# Fig. 1

# Fig. 2

# Fig. 3

# Fig. 4

# Fig. 5

# Fig. 6

# Fig. 7

Pièces usinées

Echantillonnage
de pièces

Dispositif
d'usinage

Dispositif
de mesure

Mesures

Dispositif
de calcul

Consigne

Correcteur

Valeur
indicateur
statistique

Erreur

Pièces brutes

Consigne